# EUROPEAN PATENT SPECIFICATION

(11) **EP 0 593 048 B1**
(45) Date of publication and mention of the grant of the patent: **03.12.1997**
(21) Application number: 93116620.1
(22) Date of filing: 13.10.1993
(51) Int. Cl.: F16H 47/08

(54) **Torque converter with epicyclic gear**
Drehmomentwandler mit Umlaufrädergetriebe
Convertisseur de couple à engrenage epicycloidal

(30) Priority: 13.10.1992 US 960326
(43) Date of publication of application: 20.04.1994
(73) Proprietor: CHRYSLER CORPORATION, Auburn Hills, Michigan 48326-2757 (US)
(72) Inventor: Nogle, Thomas D., Troy, Mi. 48083 (US)
(74) Representative: Wehnert, Werner, Dipl.-Ing. Patentanwälte Hauck, Graalfs, Wehnert, Döring, Siemons

(56) References cited:
- US-A- 2 645 137
- US-A- 2 720 124
- US-A- 2 720 124
- US-A- 2 869 398
- US-A- 2 890 601
- AUTOMOBILE ENGINEER no. 54 , November 1964 pages 476 - 478 'Clutches and transmissions'
- *

## Description

### BACKGROUND OF THE INVENTION

### 1. Field of the Invention

The present invention relates generally to a transmission primarily intended for motor vehicle use, and more particularly to a torque converter for a transmission.

### 2. Description of the Related Art

Generally speaking, land vehicles require three basic components. These components include a power plant (such as an internal combustion engine), a power train and wheels. The power train's main component is typically referred to as the "transmission". Engine torque and speed are converted in the transmission in accordance with the tractive-power demand of the vehicle. A conventional automatic transmission includes a hydrodynamic torque converter to transfer engine torque from the engine crankshaft to a rotatable input member of the transmission through fluid-flow forces. Examples of such torque converters are disclosed in US-A-4,240,532 and 4,289,048 which are assigned to the same assignee as the present invention.

One disadvantage of the above patented torque converters is that the transmission torque capacity is not fully utilized when mated with lower torque engines. Another disadvantage is that there is no torque compounding or multiplication for the engine input above the torque converter's coupling point speed. Yet another disadvantage is that there is no means for making a ratio shift (upshift/downshift) within these units.

An input compounding torque converter as defined in the preamble of claim 1 has been disclosed in the article,, Clutches and Transmissions", Automobile Engineer, no. 54, November 1964, p. 476. In this prior art converter the planetary gear assembly is arranged in axially adjacent relationship to the impeller, turbine and stator assembly, and the one-way clutches are disposed on axially opposite sides of the impeller, turbine and stator assembly. This results in an assembly requiring substantial space and being of substantial weight.

### SUMMARY OF THE INVENTION

It is, therefore, one object of the present invention to provide an input compounding, or two speed, torque converter for a vehicle transmission.

It is another object of the present invention to provide a relatively low-cost input compounding torque converter.

It is yet another object of the present invention to provide a relatively compact input compounding torque converter.

It is still another object of the present invention to provide a relatively light-duty input compounding torque converter.

It is a further object of the present invention to provide an input compounding torque converter which allows low torque engines to better match with higher capacity transmissions.

It is yet a further object of the present invention to provide an input compounding torque converter with an additional selectable, geartrain ratio when used with any suitable base-speed transmission.

It is a still further object of the present invention to provide for reversed power flow so that the power plant can be used to decelerate, or brake, the vehicle.

To achieve the foregoing objects, the present invention provides an input compounding torque converter as defined in claim 1. A preferred embodiment of the input compounding torque converter includes impeller means operatively connected for rotation with a prime mover. The input compounding torque converter also includes turbine means fluidly connected in driving relationship with the impeller means for receiving torque from the impeller means and planetary gear means interconnecting the turbine means and an input shaft of a transmission for multiplying torque from the turbine means to the input shaft. The planetary gear means includes an annulus gear connected to the turbine means, a planetary carrier connected to the input shaft, a sun gear, and a plurality of planetary pinion gears rotatably supported on the planetary carrier and engaging the sun and annulus gears. The input compounding torque converter also includes two overrunning clutches or free-wheels to provide torque reactions for the stator and for the sun gear in one direction while allowing each to rotate freely and independently in the opposite direction. Furthermore, the planetary carrier is connectable directly to the prime mover by way of a clutch, commonly referred to as "lock-up", such that clutch engagement provides an upshift to direct drive through the input compounding torque converter, bypassing both hydrodynamic and mechanical torque multiplication.

One advantage of the present invention is that the input compounding torque converter multiplies or compounds engine output or torque for full use of the transmission torque capacity with smaller output engines. Another advantage of the present invention is that the input compounding torque converter is relatively compact and fits into existing space or envelope of present transmissions, thereby eliminating any vehicle adaptation. Yet another advantage of the present invention is that the input compounding torque converter is relatively light-duty and low-cost. Still another advantage of the present invention is that the input compounding torque converter provides power train flexibility by allowing an additional geartrain ratio when used with a lower base speed transmission. A further advantage of the present invention is that the input compounding torque converter provides an added geartrain ratio which improves vehicle performance and fuel economy. Yet a further advantage of the present invention is that the input compounding torque converter provides a direct ratio top gear (not an overdrive ratio) when upshifted which results in less noise and parasitic losses compared to an overdrive top gear. A still further advantage of the present invention is provision for driver-choice of coast free-wheeling (unlocked) or maximum engine braking (locked-up).

Other objects, features and advantages of the present invention will be readily appreciated as the same becomes better understood after reading the following description taken in conjunction with the accompanying drawings.

### BRIEF DESCRIPTION OF THE DRAWINGS

FIG. 1 is a sectional elevational view of an input compounding torque converter according to the present invention illustrated in operational relationship with a transmission.

FIG. 2 is a chart which summarizes example gear ratio combinations for the input compounding torque converter of FIG. 1 when used in combination with an example three-speed automatic transmission.

### DESCRIPTION OF THE PREFERRED EMBODIMENT(S)

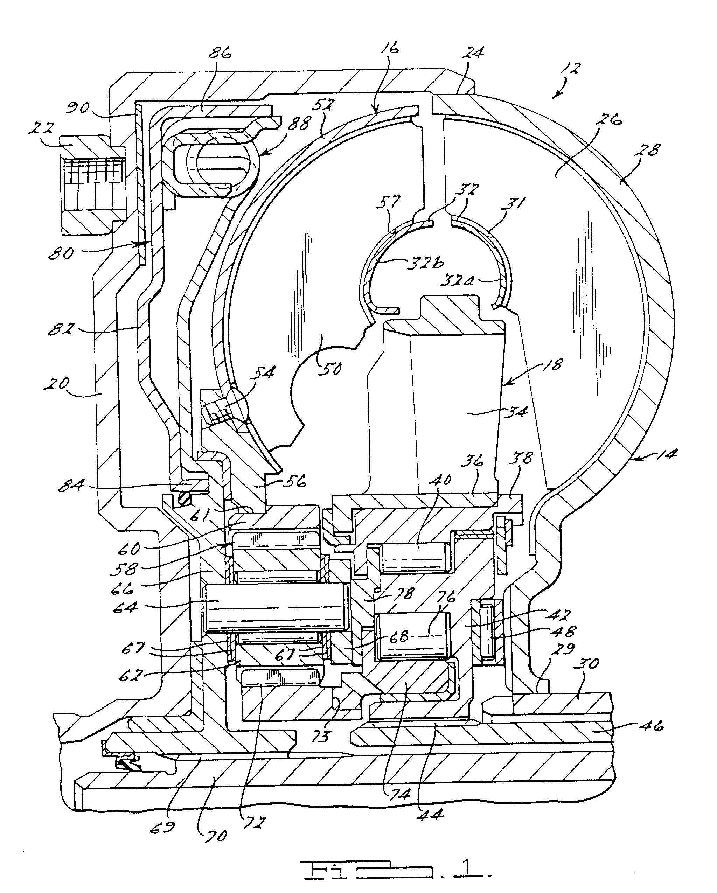

Referring to FIG. 1, a transmission such as an automatic transmission according to one embodiment of the present invention is partially shown. The transmission is adapted for use in a vehicle (not shown) such as an automotive vehicle. However, it should be appreciated that the principles of the present invention may be employed in other types of vehicles and devices.

The transmission includes an input compounding torque converter, according to the present invention and generally indicated at 12, for transmitting power from a rotating crankshaft (not shown) of a prime mover such as an engine (not shown) to an input member 70 of any suitable ongoing transmission. The transmission may then subsequently distribute this power to one or more wheels (not shown) of the vehicle. It should be appreciated that the input compounding torque converter 12 may be used in an automatic transmission system of the type disclosed in U.S. Patent No. 4,875,391, assigned to the same assignee as the present invention. It should also be appreciated that the input compounding torque converter 12 may be used in other types of transmissions such as continuously variable transmissions.

As illustrated in FIG. 1, the input compounding torque converter 12 generally includes an impeller assembly 14, turbine assembly 16, a stator assembly 18, compounding gear assembly 58 and lock-up clutch assembly 80 to be described. Power is transmitted from the rotating crankshaft of the engine to a front cover member 20 of the impeller assembly 14. The front cover member 20 may include a plurality of input drive lugs or threaded connectors 22. A rotatable plate member (not shown) is secured to the front cover member 20 by suitable fastening means such as bolts (not shown) which are received in the connectors 22 as is commonly known in the art. The front cover member 20 is secured, such as by welding at 24, to the impeller assembly 14 of the input compounding torque converter 12.

The impeller assembly 14 is fluidly connected in torsional flow relationship in a known manner with the turbine assembly 16 and the stator assembly 18. The impeller assembly 14 includes a plurality of circumferentially spaced impeller blades 26 connected to the inside of an impeller shell 28. The impeller shell 28 is secured, such as by welding at 29, to an impeller hub or pump drive shaft 30. The impeller hub 30 is drivingly engaged to a pump (not shown) from which fluid is supplied to the input compounding torque converter 12. The impeller blades 26 have an arcuate inner portion 31 disposed about one half 32a of a split torus ring 32 which reduces fluid turbulence within the torque converter 12.

The stator assembly 18 includes a plurality of circumferentially spaced stator vanes 34 which are connected at their inner end to a stator plate 36. The stator plate 36 is mounted on a stator hub 38. The stator hub 38 is mounted about a plurality of rollers 40 which act as a free wheel or one-way clutch to allow the stator vanes 34 to rotate in the same direction as the impeller assembly 14 and turbine assembly 16 during both converter coupling and lockup operation. The rollers 40 are mounted on a cam-shaped stationary stator reaction member 42. The stator reaction member 42 is connected, such as by a spline connection 44, to a stationary reaction shaft 46. An annular thrust bearing 48 is disposed between the stator reaction member 42 and the impeller shell 28. It should be appreciated that other suitable types of one-way clutches may be used. It should also be appreciated that other bushings, retainer members and the like may be used and are illustrated in FIG. 1 although not specifically described.

The turbine assembly 16 includes a plurality of circumferentially spaced turbine blades 50 which are connected to the inside of a turbine shell 52. The turbine shell 52 is secured, by suitable means such as screws 54, to a turbine hub member 56. The turbine blades 50 have an arcuate inner portion 57 disposed about the other half 32b of the split torus ring 32 previously described.

The compounding gear assembly, generally indicated at 58, multiplies or compounds torque from the turbine assembly 16 to an input member 70 for the ongoing transmission. The compounding gear assembly 58 includes an annulus gear 60 secured, such as by welding at 61, to the turbine hub member 56. The compounding gear assembly 58 also includes a plurality of circumferentially spaced planetary pinion gears 62 mounted about planetary pinion shafts 64 which are connected to a planetary carrier 66. The planetary pinion gears 62, along with thrust washers 67, are held on the planetary pinion shafts 64 via plate member 68. The planetary carrier 66 is drivingly connected, such as by a spline connection 69, to a rotatable input member or shaft 70 for the ongoing transmission. The compounding gear assembly 58 further includes a sun gear 72 engaging the pinion gears 62 and is secured, such as by welding at 73, to a sun hub member 74. The sun hub member 74 is mounted within a plurality of rollers 76 which act as a free wheel or one-way clutch to allow the sun gear 72 to rotate in the same direction as the turbine assembly 16 during lock-up operation in both driving and engine braking. A retainer member 78 is disposed between the sun hub member 74 and stator hub member 38 to retain the rollers 40 and 76 to the cam-shaped stator reaction member 42. It should be appreciated that the annulus gear 60 may be integral with the turbine assembly 16. It should also be appreciated that the compounding gear assembly 58 has a predetermined gear ratio such as 1.45:1.

When applied, the lock-up clutch assembly, generally indicated at 80, prevents slip between the rotating crankshaft of the engine and the planetary carrier 66 of the compounding gear assembly 58. The lock-up clutch assembly 80 includes an annular piston member 82 having an inner flange portion 84 slidingly and sealingly mounted for axial movement on the planetary carrier 66 of the compounding gear assembly 58. The piston member 82 has an outer flange portion 86 connected to a torsional isolation mechanism, generally indicated at 88, which is drivingly connected to the planetary carrier 66. Such a torsional isolation mechanism is disclosed in U.S. Patent Nos. 4,240,532 and 4,289,048, the disclosures of both patents are hereby incorporated by reference. The lock-up clutch assembly 80 further includes an annular disc-shaped frictional element or lock-up disc 90 carried proximate the outer periphery of the front cover member 20 for engagement with a cooperating portion of the piston member 82. It should be appreciated that the torsional isolation mechanism 88 is optional and may not be needed for "smooth-running" power sources or if "partial lock" is used (e.g., controlled, slight slip).

### OPERATION OF THE TORQUE CONVERTER

Rotation of the crankshaft of the engine causes the front cover member 20 to rotate with it due to the connection with the plate member (not shown). Since the front cover member 20 is welded at 24 to the impeller shell 28 of the impeller assembly 14, the impeller assembly 14 also rotates with the crankshaft. The fluid within the impeller assembly 14 is set into motion by the rotation of the impeller assembly 14 and kept filled by the fluid pressure from a pump (not shown). The impeller blades 26 start to carry the fluid around with them. As the fluid is spun around by the impeller blades 26, it is thrown outward by centrifugal force and into the turbine assembly 16 at an angle. The fluid strikes the turbine blades 50 of the turbine assembly 16, thus imparting torque, or turning effort to the turbine assembly 16 and causing the turbine shell 52 and the turbine assembly 16 to rotate. Since the turbine shell 52 is connected by screws 54 to the turbine hub 56 which is, in turn, connected to the annulus gear 60 of the compounding gear assembly 58, the annulus gear 60 rotates with the turbine assembly 16.

During normal downshifted operation of the input compounding torque converter 12, the lock-up piston 82 is not applied. Rotation of the annulus gear 60 causes the planetary pinion gears 62 to rotate, in turn, causing rotation of the planetary carrier 66. Since the planetary carrier 66 is splined at 69 to the input shaft 70, the input shaft 70 rotates due to rotation of the planetary carrier 66. Thus, torque is imparted to the input shaft 70 via the compounding gear assembly 58. It should be appreciated that the stator blades 34 and sun gear 72 are held stationary via the rollers 40 and 76, stator reaction member 42 and stationary reaction shaft 46.

However, during normal upshifted operation of the input compounding torque converter 12, the lock-up piston 82 is applied. Fluid pushes the lock-up piston 82 against the front cover member 20 with the friction disc 90 sandwiched between the two elements. The flow of power or engine torque is then transmitted through the front cover member 20, the lock-up piston 82 and torsional isolation mechanism 88, in turn, to the planetary carrier 66. Rotation of the planetary carrier 66 causes the sun gear 72 to free wheel via the rollers 76. Thus, the turbine assembly 16, planetary carrier 66 and input shaft 70 rotate together. It should be appreciated that the stator assembly 18 will also free wheel. It should also be appreciated that the flow of power is reversed during engine braking.

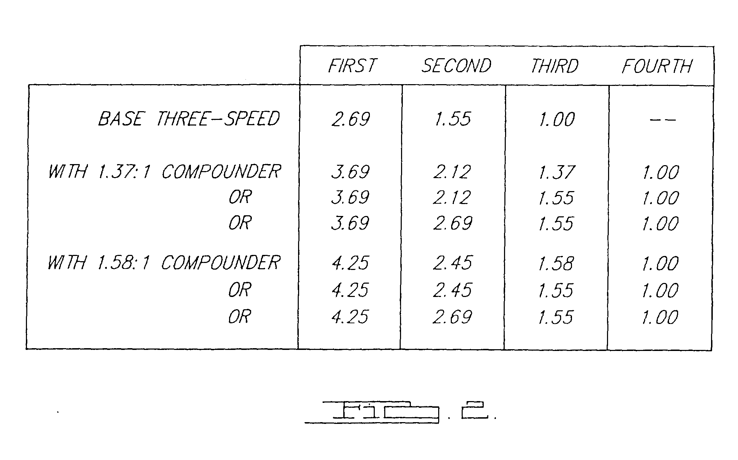

As illustrated in FIG. 2, a chart of example gear ratio combinations is shown for a transmission such as a base three-speed automatic transmission. The compounding gear assembly 58 may have, for example, either a 1.37 to 1 or 1.58 to 1 gear ratio. It should be appreciated that all six ratios may be used in a variety of driver- or computer-selected four speed shift patterns.

Accordingly, the input compounding torque converter 12 provides a two speed fluid coupling and a relatively simple, low cost form of compounder. The input compounding torque converter 12 multiplies engine torque to allow lower torque engines to mate with higher capacity transmissions. The input compounding torque converter 12 must use lockup operation for engine braking. Also, when locked, the compounding gear assembly 58 provides a direct gear drive and not an overdrive. Further, the planetary carrier 66 is also connectable directly to the engine by way of lock-up clutch assembly 80, such that clutch engagement provides direct drive through the input compounding torque converter 12, bypassing both the hydrodynamic and mechanical torque multiplication. Additionally, the stator assembly 18 and one-way clutch 40 may be optional and not used when the input compounding torque converter 12 is utilized as an input compounding fluid coupling. Finally, the input compounding torque converter 12 accomplishes torque compounding or multiplication with one planetary gearset and two free-wheels.

The present invention has been described in an illustrative manner. It is to be understood that the terminology which has been used is intended to be in the nature of words of description rather than of limitation.

Many modifications and variations of the present invention are possible in light of the above teachings. Therefore, within the scope of the appended claims, the present invention may be practiced other than as specifically described. Foreseeable applications include use with high torque engines where transmission limitations are protected by engine control and/or reduced hydrodynamic torque multiplication.

## Claims

1. An input compounding torque converter for converting and multiplying torque from a prime mover to an input shaft of a transmission, said input compounding torque converter comprising:
an impeller (14) operatively connected for rotation with a prime mover;
a turbine (16) fluidly connected in driving relationship with said impeller (14) for receiving torque from said impeller (14);
a stator (18) fluidly connected between said impeller (14) and said turbine (16);
a planetary gear assembly (58) interconnecting said turbine (16) and an input shaft (70) of a transmission for multiplying torque from said turbine to the input shaft;
said planetary gear assembly (58) including an annulus gear (60) connected to said turbine (16), a planetary carrier (66) connected to the input shaft (70), a sun gear (72), and a plurality of panetary pinion gears (62) rotatably supported on said planetary carrier and engaging said sun and annulus gears;
means (80) for locking and unlocking said planetary carrier (66) and the input shaft (70) to the prime mover to provide a single path for transmitting torque from the prime mover to the input shaft through said planetary carrier during locked operation and from said turbine (16) to said planetary carrier through said planetary gear assembly (58) during unlocked operation;
a first one-way clutch (38, 40, 42) for holding stationary said stator (18) against rotation in the direction of said impeller (14) and allowing freewheeling motion of said stator in the opposite direction of said impeller,
characterized by said first one-way clutch including a plurality of rollers (40);
a second one-way clutch (42, 74, 76) for holding stationary said sun gear (72) against rotation in a direction opposite of said impeller (14) and allowing freewheeling motion of said sun gear in the same direction as said impeller, said second one-way clutch including a plurality of rollers (76) spaced radially with respect to said rollers (40) of said first one-way clutch (38, 40, 42);
a stationary reaction member (42) fixedly secured to a stationary portion (46) of the transmission and including an intermediate portion disposed between said radially spaced rollers (40; 76) of said first and second one-way clutches.

2. An input compounding torque converter as set forth in claim 1 wherein said intermediate portion of said stationary reaction member (42) has an inner race and an outer', race for said rollers (40, 76) of said first and second one-way clutches.

3. An input compounding torque converter as set forth in claim 1 or 2 including a front cover (20) connected to said impeller (14) and rotatingly drivingly engageable with the prime mover, said means (80) for locking and unlocking said planetary carrier (66) including a piston member (82) operatively interconnected to said planetary carrier and movable between engaged and disengaged positions relative to said front cover (20) to provide a single path for transmitting torque from the prime mover to the input shaft (70).

4. An input compounding torque converter as set forth in claim 3 wherein said means (80) for locking and unlocking said planetary carrier (66) further includes a torsional isolation mechanism (88) interconnecting said piston member (82) and said planetary carrier (66).

5. An input compounding torque converter as set forth in claim 3 or 4 wherein said front cover (20) includes a friction disk (90) disposed on one side thereof for frictionally engaging said piston member (82) when it is in said engaged position.

## Patentansprüche

1. Drehmomentwandler mit Eingangsverstärkung zum Wandeln und Vervielfachen des von einem Primärantrieb auf die Eingangswelle eines Getriebes übertragenen Drehmomentes, wobei der Drehmomentwandler aufweist:
ein Laufrad (14), das mit einem Primärantrieb drehfest verbunden ist;
eine Turbine (16), die mit dem Laufrad (14) strömungsmäßig in Antriebsverbindung steht, um Drehmoment von dem Laufrad (14) zu empfangen;
einen Stator (18), der strömungsmäßig zwischen das Laufrad (14) und die Turbine (16) geschaltet ist;
eine Planetenradanordnung (58), die die Turbine (16) und eine Eingangswelle (70) eines Getriebes miteinander verbindet, um das von der Turbine auf die Eingangswelle übertragene Drehmoment zu vervielfachen;
wobei die Planetenradanordnung (58) ein mit der Turbine (16) verbundenes Ringrad (60), einen mit der Eingangswelle (70) verbundenen Planetenträger (66), ein Sonnenrad (72) und mehrere Planetenräder (62) aufweist, die auf dem Planetenträger drehbar gelagert sind und mit dem Sonnenrad und dem Ringrad in Eingriff stehen;
Mittel (80) zum Verriegeln und Entriegeln des Planetenträgers (66) und der Eingangswelle (70) bezüglich des Primärantriebes, um einen einzigen Strang für die Drehmomentübertragung von dem Primärantrieb auf die Eingangswelle durch den Planetenträger im verriegelten Zustand und von der Turbine (16) auf den Planetenträger durch die Planetenräder (58) im entriegelten Zustand zu bilden;
eine erste Einwegkupplung (38, 40, 42), die den Stator (18) gegen eine Drehung in Richtung des Laufrades (14) sichert und eine freie Bewegung des Stators in der entgegengesetzten Richtung des Laufrades zuläßt,
dadurch gekennzeichnet,
daß die erste Einwegkupplung mehrere Rollen (40) aufweist;
daß eine zweite Einwegkupplung (42, 74, 76) vorgesehen ist, die das Sonnenrad (72) gegen eine Drehung in einer Richtung entgegengesetzt zum Laufrad (14) sichert und eine freie Bewegung des Sonnenrads in der gleichen Richtung wir das Laufrad zuläßt, wobei die zweite Einwegkupplung mehrere Rollen (76) aufweist, die bezüglich der Rollen (40) der ersten Einwegkupplung (38, 40, 42) radial beabstandet sind;
und daß ein stationäres Reaktionsteil (42) vorgesehen ist, das an einem stationären Abschnitt (46) des Getriebes befestigt ist und einen Zwischenabschnitt aufweist, der zwischen den radial beabstandeten Rollen (40; 76) der ersten und zweiten Einwegkupplung angeordnet ist.

2. Drehmomentwandler nach Anspruch 1, bei dem der Zwischenabschnitt des stationären Reaktionsteils (42) eine innere Laufbahn und eine äußere Laufbahn für die Rollen (40, 76) der ersten und zweiten Einwegkupplung aufweist.

3. Drehmomentwandler nach Anspruch 1 oder 2 mit einem vorderen Deckel (20), der mit dem Laufrad (14) verbunden ist und mit dem Primärantrieb in Drehverbindung steht, wobei die Mittel (80) zum Verriegeln und Entriegeln des Planetenträgers (66) einen Kolben (82) aufweisen, der mit dem Planetenträger verbunden ist und zwischen einer Einrückstellung und einer Ausrückstellung bezüglich des vorderen Deckels (20) bewegbar ist, um einen einzigen Strang zum Übertragen des Drehmomentes von dem Primärantrieb auf die Eingangswelle (70) zu bilden.

4. Drehmomentwandler nach Anspruch 3, bei dem die Mittel (80) zum Verriegeln und Entriegeln des Planetenträgers (66) einen Torsionsisoliermechanismus (88) aufweisen, der den Kolben (82) und den Planetenträger (66) miteinander verbindet.

5. Drehmomentwandler nach Anspruch 3 oder 4, bei dem der vordere Deckel (20) eine Reibscheibe (90) aufweist, die auf dessen einer Seite angeordnet ist, um mit dem Kolben (82) in Reibanlage zu treten, wenn er sich in seiner Einrückstellung befindet.

## Revendications

1. Convertisseur composant de couple d'entrée pour convertir et multiplier le couple d'un moteur à un arbre d'entrée d'une transmission, ledit convertisseur composant le couple d'entrée comportant :
un rotor (14) au fonctionnement relié en rotation avec un moteur ;
une turbine (16) reliée fluidement en relation menante audit rotor (14) pour recevoir le couple dudit rotor (14) ;
un stator (18) relié fluidement entre ledit rotor (14) et ladite turbine (16) ;
un ensemble formant engrenage planétaire (58) reliant ladite turbine (16) et un arbre d'entrée (70) d'une transmission pour multiplier le couple de ladite turbine à l'arbre d'entrée ;
ledit ensemble formant engrenage planétaire (58) incluant une couronne dentée (60) reliée à ladite turbine (16), un support planétaire (66) relié à l'arbre d'entrée (70), une roue solaire (72) et plusieurs pignons planétaires (62) supportés à rotation sur ledit support planétaire et venant en prise avec ladite roue solaire et lesdites couronnes dentées ;
un moyen (80) pour verrouiller et déverrouiller ledit support planétaire (66) et l'arbre d'entrée (70) au moteur pour établir un seul trajet pour transmettre le couple du moteur à l'arbre d'entrée par ledit support planétaire pendant l'opération verrouillée et de ladite turbine (16) audit support planétaire par ledit ensemble formant engrenage planétaire (58) pendant l'opération déverrouillée ;
un premier embrayage à roue libre (38, 40, 42) pour maintenir stationnaire ledit stator (18) contre une rotation dans la direction dudit rotor (14) et permettre un mouvement de roue libre dudit stator dans la direction opposée dudit rotor, caractérisé en ce que ledit embrayage à roue libre comporte plusieurs rouleaux (40) ;
un second embrayage à roue libre (42, 74, 76) pour maintenir stationnaire ladite roue solaire (72) contre une rotation dans une direction opposée audit rotor (14) et permettre un mouvement de roue libre de ladite roue solaire dans la même direction que ledit rotor, ledit second embrayage à roue libre incluant une pluralité de rouleaux (76) espacés radialement relativement auxdits rouleaux (40) dudit premier embrayage à roue libre (38, 40, 42) ;
un élément de réaction stationnaire (42) installé fixement sur une partie stationnaire (46) de la transmission et incluant une partie intermédiaire disposée entre lesdits rouleaux espacés radialement (40 ; 76) desdits premier et second embrayages à roue libre.

2. Convertisseur composant de couple d'entrée selon la revendication 1, où ladite partie intermédiaire dudit élément de réaction stationnaire (42) a un chemin intérieur et un chemin extérieur pour lesdits rouleaux (40, 76) desdits premier et second embrayages à roue libre.

3. Convertisseur composant de couple d'entrée selon la revendication 1 ou 2, incluant un capot avant (20) relié audit rotor (14) et apte à être mis en prise de rotation menante avec le moteur, ledit moyen (80) pour verrouiller et déverrouiller ledit support planétaire (66) incluant un élément de piston (82) relié fonctionnellement audit support planétaire et déplaçable entre des positions en et hors prise relativement audit capot avant (20) pour constituer un chemin unique pour la transmission du couple du moteur à l'arbre d'entrée (70).

4. Convertisseur composant de couple d'entrée selon la revendication 3, où ledit moyen (80) pour verrouiller et déverrouiller ledit support planétaire (66) comporte en outre un mécanisme d'isolation tortionnel (88) reliant ledit élément de piston (82) et ledit support planétaire (66).

5. Convertisseur composant de couple d'entrée selon la revendication 3 ou 4, où ledit capot avant (20) comporte un disque de friction (90) disposé sur un côté de celui-ci pour une mise en prise de friction avec ledit élément de piston (82) lorsqu'il se trouve dans ladite position en prise.
